# EUROPÄISCHE PATENTANMELDUNG

(11) **EP 4 624 256 A1**
(43) Veröffentlichungstag der Anmeldung: **01.10.2025**
(21) Anmeldenummer: 25164975.2
(22) Anmeldetag: 20.03.2025
(51) Int. Cl.: B60Q 1/26

(54) **SIGNALLEUCHTE**

(30) Priorität: 21.03.2024 DE 102024202679
(71) Anmelder: MOBA Mobile Automation AG, 65555 Limburg (DE)
(72) Erfinder: ZILS, Boris, 65555 Limburg (DE)
(74) Vertreter: Pfitzner, Hannes

(57) **Zusammenfassung**

Signalleuchte (10), insbesondere Signalleuchte (10) für eine Baumaschine, Arbeitsmaschine, Landmaschine oder ein Fahrzeug, mit folgenden Merkmalen: einem Gehäuse (12); mindestens einem in das Gehäuse (12) integrierten Leuchtelement (14), das ausgebildet ist, einen Zustand zu visualisieren; wobei das Gehäuse (12) eine C- oder U-Form aufweist und durch die C-Form eine Hinterschneidung ausgebildet wird, wobei das Gehäuse (12) bereichsweise flexibel ist.

## Beschreibung

Ausführungsbeispiele der vorliegenden Erfindung beziehen sich auf eine Signalleuchte, insbesondere auf eine Signalleuchte für eine Baumaschine, Arbeitsmaschine, Landmaschine oder ein Fahrzeug.

Signalleuchten oder auch Statusleuchten dienen zur Anzeige verschiedener Maschinenzustände, wie z. B. betriebsbereit, Störung oder Warnung. Hierzu können beispielsweise verschiedene Farben verwendet werden. Farb- und Signalarten für solche Anzeigen sind beispielsweise aus der DE 10212895 A1 bekannt. Hier ist beispielsweise eine Signalsäule mit mehreren Signalelementen und verschiedenen Farben offenbart. Problematisch ist die Befestigung derartiger Signalleuchten, gerade wenn es darum geht, solche Signalleuchten auf unterschiedlichen Maschinen zu montieren.

Die Ansteuerung von Signalleuchten oder Statusleuchten über einen Bus ist beispielsweise in der DE 112019004337 T5 offenbart. Die hier offenbarte Sensorstatusindikatorbaugruppe umfasst eine Erfassungsschnittstelle, die dazu konfiguriert ist, kommunikativ mit einem Kabelbaum eines Sensors gekoppelt zu werden.

Aufgabe der vorliegenden Erfindung ist es, ein Konzept für eine Signalleuchte zu schaffen, das sich durch einen flexiblen und universellen Einsatz auszeichnet.

Die Aufgabe wird durch den Gegenstand der unabhängigen Patentansprüche gelöst.

Ausführungsbeispiele der vorliegenden Erfindung schaffen eine Signalleuchte, insbesondere eine Signalleuchte für eine Baumaschine, eine Arbeitsmaschine, eine Landmaschine oder ein Fahrzeug, mit einem Gehäuse und mindestens einem in das Gehäuse integrierten Leuchtelement, das ausgebildet ist, einen Zustand zu visualisieren. Hierbei kann es sich beispielsweise um ein rotes, gelbes, grünes oder weißes Leuchtelement, wie z. B. eine LED, handeln. Das Gehäuse weist eine C-Form oder alternativ eine U-Form auf und ist bereichsweise flexibel.

Entsprechend Ausführungsbeispielen ist das Gehäuse ausgebildet, aufgrund der bereichsweise flexiblen Eigenschaft des Gehäuses einen Öffnungsquerschnitt definiert durch die Enden bzw. Gehäusehälften der C- oder der U-Form elastisch verformt zu werden.

Ausführungsbeispielen der vorliegenden Erfindung liegt die Erkenntnis zugrunde, dass eine Signalleuchte in einer C- und U-Form gestaltet werden kann und, sobald eine gewisse Flexibilität im Gehäuse eingebaut ist, diese C- und U-Form zum Klemmen genutzt werden kann. Somit ist es vorteilhafterweise möglich, die Signalleuchte an ein Rohr oder einen Rahmen einer Baumaschine, Arbeitsmaschine, Landmaschine oder ein Fahrzeug festzuklemmen. Das ermöglicht einen flexiblen Einsatz.

Entsprechend Ausführungsbeispielen kann die Signalleuchte einen Datenbus (bspw. CAN) und/oder eine Datenbusschnittstelle aufweisen, über welche diese mittels einer Steuerung oder einer Baumaschine, Arbeitsmaschine, Landmaschine oder einem Fahrzeug oder einer Komponente der Maschine/des Fahrzeugs, wie beispielsweise ein Arbeitsgerät oder Anbaugerät, koppelbar ist. Z.B. kann ein CANopen Protokoll verwendet werden, das eine schnelle Integration, einfache Anpassung von Baud-Rate und Node-ID ermöglicht. Ein weiterer Vorteil entsteht durch die U- bzw. C-Form, nämlich derart, dass so in einen großen Abstrahlwinkelbereich eine Abstrahlung des Lichtsignals möglich ist. Entsprechend Ausführungsbeispielen ist also das zumindest eine integrierte Leuchtelement ausgebildet, um einen Abstrahlwinkel > 120°, > 150°, > 180° oder sogar > 270° abzudecken bzw. diesen Winkel abzustrahlen. Ferner kann die Einheit eine Steuerung zum Dekodieren der Datenbussignale und zur entsprechenden (individuellen) Ansteuerung der Beleuchtungselemente aufweisen.

Entsprechend weiteren Ausführungsbeispielen weist die Signalleuchte eine elektrische Energieversorgung, insbesondere eine in der Signalleuchte integrierte oder daran angeordnete Batterie oder wiederaufladbare Batterie auf. Diese zwei Maßnahmen erhöhen weiter die Flexibilität und den universellen Einsatz, da so die Signalleuchte einfach einzumontieren und dann auch autark zu betreiben ist, ohne dass zusätzlicher Verkabelungsaufwand anfällt.

Entsprechend Ausführungsbeispielen weist das Gehäuse in der ersten und zweiten Dimension eine C- bzw. U-Form auf. Ferner hat das Gehäuse in der dritten Dimension eine längliche Form. Anders ausgedrückt heißt es, dass bei der dreidimensionalen Betrachtungsweise das Gehäuse mit der C- oder U-Form eine Zylinderform aufweisen kann. Ein derartiges Gehäuse ist robust und kann auch mit entsprechendem Spritzschutz (z.B. IP67) versehen werden.

Entsprechend Ausführungsbeispielen ist in der Zylinderform bzw. allgemein durch die C- oder die U-Form eine halbrunde Querschnittsöffnung bzw. allgemein ein definierter Öffnungsquerschnitt ausgebildet. Der halbrunde Öffnungsquerschnitt bzw. der definierte Öffnungsquerschnitt ist ausgebildet, ein Klemmen gegenüber einem Gegenstück zu bewirken, z. B. gegenüber einem Rohr. Ferner kann auch ein Reibschluss oder Kraftschluss mit dem Gegenstück ausgebildet werden. Die Kraft für den Kraftschluss bzw. für den Reibschluss sowie auch für das Klemmen wird vorteilhafterweise durch die elastische Eigenschaft bei elastischer Verformung erreicht.

Bezüglich dem integrierten Leuchtelement sei angemerkt, dass entsprechend Ausführungsbeispielen dieses verschiedene Farben und/oder Darstellungsfrequenzen aufweisen kann, um verschiedene Zustände darzustellen. Beispielsweise kann ein rotes Licht als Alarmsignal emittiert werden, wobei abhängig vom Blinken bzw. einer statischen Beleuchtung es denkbar wäre, dass hier die Prioritäten unterschieden werden.

Entsprechend Ausführungsbeispielen ist das integrierte Leuchtelement als Lauflicht oder als Matrix zur Darstellung von Texten, Bildern oder ähnlichem ausgebildet. Das Lauflicht ermöglicht durch individuelle Ansteuerung mehrerer Leuchtelemente beispielsweise eine Anzeige eines Wartezustands. Mittels der Matrix, bspw. einer LED-Matrix, kann die Signalleuchte an Kundenbedürfnisse angepasst werden, beispielsweise um kundenspezifische Logos, Bilder und/oder Texte darzustellen oder anzuzeigen. Ferner können die Leuchtelemente zur Darstellung von z.B. Füllständen oder individuellen Meldungen genutzt werden.

Entsprechend Ausführungsbeispielen ist in oder an der Signalleuchte ein Helligkeitssensor angeordnet, um die Helligkeit des integrierten Leuchtelements oder des Lauflichts oder der Matrix automatisch an die Umgebungshelligkeit anzupassen. Hierdurch wird die Ablesbarkeit der Leuchtelemente bei sich ändernden Lichtverhältnissen verbessert. Ferner kann hierdurch auch der Stromverbrauch der Signalleuchte optimiert werden, bspw. wenn die Helligkeit der Leuchtelemente je nach Umgebungshelligkeit erhöht oder verringert wird.

Entsprechend Ausführungsbeispielen ist in oder an der Signalleuchte ein Temperatursensor oder Temperaturfühler angeordnet, um eine Umgebungstemperatur oder eine im Gehäuse der Signalleuchte vorherrschende Innentemperatur zu erfassen. So kann beispielsweise in Abhängigkeit der gemessenen Temperatur die Helligkeit des integrierten Leuchtelements oder des Lauflichts oder der Matrix automatisch angepasst werden. Wird die Signalleuchte beispielsweise an einem sehr warmen Tag betrieben, so kann es vorkommen, dass die Temperatur im Inneren der Signalleuchte signifikant ansteigt und die darin befindlichen elektronischen Komponenten wie Leuchtelemente, LED-Matrix usw. Schaden nehmen könnten. Um dies zu vermeiden, kann bei ansteigender Temperatur beispielsweise die Helligkeit der Leuchtelemente, LED-Matrix usw. herabgesetzt werden und so die entstehende Verlustwärme zu begrenzen.

Entsprechend Ausführungsbeispielen ist in oder an der Signalleuchte ein Neigungs- oder Lagesensor angeordnet, um die Anordnung der Signalleuchte an der Baumaschine/Arbeitsmaschine/Landmaschine oder des Fahrzeugs in waagerechter oder senkrechter Position zu ermitteln. Weiter kann mit dem Neigungs- oder Lagesensor eine Lage- oder Positionsänderung der Signalleuchte erkannt werden. Weist die Signalleuchte eine Matrix zur Darstellung von Logos, Bildern oder Texten auf, so ist es beispielsweise bei einer Drehung der Signalleuchte um 90° möglich, den angezeigten Inhalt (bspw. ein Bild oder einen Text) automatisch an die neue Lage/Position anzupassen. Der Neigungs- oder Lagesensor kann dabei absolute Werte oder Relativwerte, das heißt Änderungen wie Drehbewegungen etc. messen und ist bspw. ein Neigungssensor oder Neigungsschalter, ein Beschleunigungssensor, ein Gyroskop, ein Drehratensensor oder dergleichen.

Alle gemessenen oder erfassten Sensorwerte des Helligkeitssensors, des Temperatursensors und/oder des Neigungs- oder Lagesensors sowie weitere Informationen wie beispielsweise die Angabe, ob und wenn ja, um wie viel die Helligkeit der Leuchtelemente, LED-Matrix usw. herabgesetzt wurde, können auch über den Datenbus oder die Datenbusschnittstelle der Signalleuchte an die Steuerung oder eine Anzeige (bspw. ein Bedienterminal) der Maschine/des Fahrzeugs übertragen werden.

Entsprechend einem weiteren Ausführungsbeispiel kann die Signalleuchte auch noch durch einen integrierten Summer oder Buzzer unterstützt werden, der akustisch auf einen aktuellen Zustand oder eine Zustandsänderung hinweist.

Ein weiteres Ausführungsbeispiel schafft eine Baumaschine, wie z. B. eine Arbeitsmaschine, Landmaschine, etc., oder ein Fahrzeug, die/das eine entsprechende Signalleuchte aufweist. Entsprechend einem Ausführungsbeispiel kann die Baumaschine/Arbeitsmaschine/Landmaschine oder das Fahrzeug ein Rohr oder einen Rahmen oder einen Halter aufweisen, der in seinem Querschnitt im Wesentlichen einem Öffnungsquerschnitt des C-bzw. U-förmigen Gehäuses der Signalleuchte entspricht.

Durch informatorische Kopplung der Baumaschine/Arbeitsmaschine/Landmaschine oder des Fahrzeugs oder der Steuerung der Maschine/des Fahrzeugs mit der Signalleuchte ist es möglich, dass mittels der Signalleuchte ein oder mehrere Zustände der Baumaschine/Arbeitsmaschine/Landmaschine oder des Fahrzeugs oder einer an der Maschine/an dem Fahrzeug angeordneten Komponente, wie ein Arbeitsgerät oder Anbaugerät, angezeigt werden. Bei der an der Maschine/des Fahrzeugs angeordneten Komponente kann es sich beispielsweise um einen Arbeitskorb, einen (teleskopierbaren) Ausleger, eine Drehleiter, eine (ausfahrbare) Stütze oder um eine Einbaubohle eines Straßenfertigers, einen Gutbunker, eine Schaufel, einen Greifer, eine Schar, ein Schild, ein land- oder forstwirtschaftliches Anbaugerät zur Bodenbearbeitung oder dergleichen handeln. Denkbar sind in diesem Zusammenhang alle bekannten Arbeitsgeräte oder Anbaugeräte von Baumaschinen, Arbeitsmaschinen oder Landmaschinen sowie Fahrzeugen. Dabei können mittels der Signalleuchte beispielsweise Füllstände, Abstände, Messwerte wie bspw. Druck-, Gewichts- oder Temperaturwerte, Grenzwertangaben, Sensordaten, Parameterdaten der Maschine oder der Komponente, Richtungsinformationen (beispielsweise bei ein- und ausfahrenden oder anzuhebenden Maschinenteilen) oder ähnliches, oder ganz allgemein ein derzeitiger oder gegenwärtiger Zustand (Status) der Maschine, des Fahrzeugs oder der Komponente oder eine Änderung von Werten oder Zuständen jeglicher Art angezeigt werden. Bei den Maschinen kann es sich beispielsweise um mobile (Straßen-)baumaschinen wie Straßenfertiger, Straßenwalzen, Fräsen, Grader, Bagger, mobile Arbeitsmaschinen wie Hubarbeitsbühnen, Kräne, Müllentsorgungsfahrzeuge, Radlader sowie land- oder forstwirtschaftliche Ernte- und Arbeitsmaschinen oder ähnliches handeln. Denkbar sind in diesem Zusammenhang alle bekannten Baumaschinen, Arbeitsmaschinen sowie Land- oder Forstmaschinen. Bei den Fahrzeugen kann es sich bspw. um Rettungs- oder Einsatzfahrzeuge oder ähnliches handeln.

Ein weiteres Ausführungsbeispiel schafft ein System umfassend eine Signalleuchte sowie ein Rohr bzw. Rahmen bzw. Halter mit einem definierten Querschnitt.

Im Nachfolgenden werden Ausführungsbeispiele anhand der beiliegenden Zeichnungen erläutert. Es zeigen:

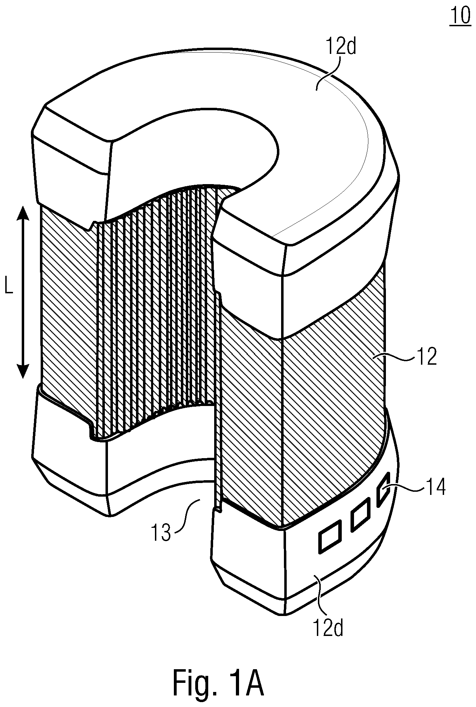

- Fig. 1a: eine schematische Darstellung der Signalleuchte gemäß einem Ausführungsbeispiel in einer perspektivischen Darstellung;

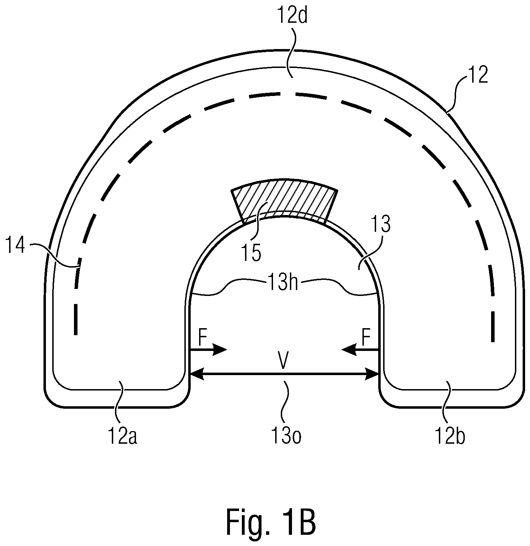

- Fig. 1b: eine schematische Darstellung der Signalleuchte aus Fig. 1a in einer Draufsicht zur Erläuterung des Klemmmechanismus ausgehend von der C- bzw. U-Form gemäß Ausführungsbeispielen; und

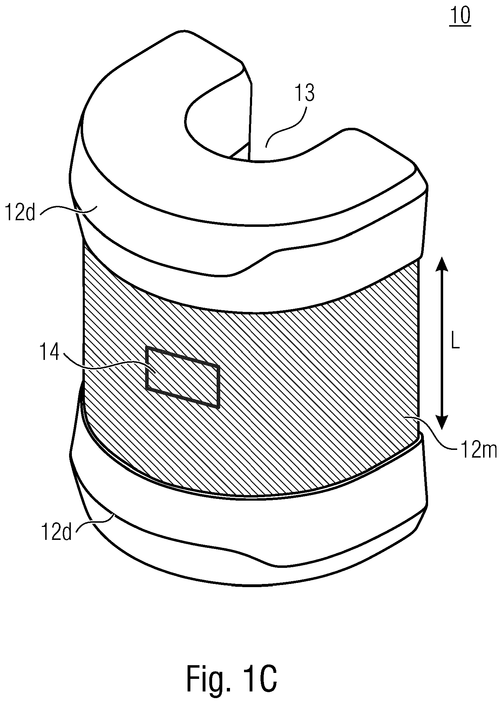

- Fig. 1c: eine weitere schematische Darstellung der Signalleuchte gemäß einem Ausführungsbeispiel in einer weiteren perspektivischen Darstellung.

Bevor nachfolgend Ausführungsbeispiele anhand der beiliegenden Zeichnungen erläutert werden, sei darauf hingewiesen, dass gleichwirkende Elemente und Strukturen mit gleichen Bezugszeichen versehen sind, so dass die Beschreibung derer aufeinander anwendbar ist.

Fig. 1a zeigt die Signalleuchte 10 mit einem Gehäuse 12 sowie in das Gehäuse eingelassene Leuchtelemente 14. In dem vorliegenden Fall können diese hinter einem oder mehreren durchsichtigen Bereichen, die mit dem Bezugszeichen 12d versehen sind, angeordnet sein.

Im vorliegenden Fall weist das Gehäuse 12 eine U- bzw. C-Form auf. Das heißt also, dass das Gehäuse 12 diese C-Form in zwei Dimensionen ausbildet, während das Gehäuse 12 in einer dritten Dimension (Längendimension, vgl. Pfeil L) eine längliche Form aufweist. Abgesehen von der Aussparung, die durch die C-Form bedingt ist, hat das Gehäuse 12 also eine Zylinderform mit der Aussparung 13. Die Aussparung 13 kann einen runden Bereich mit oder ohne Hinterschneidung aufweisen, wie es deutlich anhand von Fig. 1b zu erkennen ist.

Fig. 1b zeigt eine Draufsicht auf die Signalvorrichtung 10. Wie zu erkennen ist, erstreckt sich das Gehäuse 12 sowie der durchsichtige Bereich 12d des Gehäuses 12 U-förmig um die Aussparung 13. Alternativ kann das Gehäuse auch eine C-Form aufweisen, sodass sich an den Stellen 13h Hinterschneidungen ausbilden. Die Aussparung 13 kann also gemäß weiteren Ausführungsbeispielen eine Hinterschneidung 13h aufweisen, wobei diese Hinterschneidung 13h optional ist. Das heißt also, dass entsprechend Ausführungsbeispielen das Gehäuse 12 eine C-Form aufweisen kann oder entsprechend alternativen Ausführungsbeispielen auch eine U-Form. In einem Bereich der Aussparung 13 oder auch in mehreren Bereichen der Aussparung 13 weist das Gehäuse 12 einen flexiblen Bereich auf. Dieser flexible Bereich ist mit dem Bezugszeichen 15 versehen. Durch den flexiblen Bereich 15 ist es möglich, dass die zwei Gehäusehälften 12a und 12b zumindest in einem begrenzten Bereich beweglich sind. Der Bewegungs- bzw. Verformungsbereich ist mit dem Bezugszeichen V versehen. Bei Verformung des Gehäuses 12 der Spreizung der Gehäusehälften 12a und 12b um den Bereich 15 kommt es zu einer elastischen Verformung des Bereichs 15, so dass dann als Reaktion auf die Verformung die Kraft F radial durch die zwei Gehäusehälften 12a und 12b bzw. die zwei Schenkel 12a und 12b ausgeübt wird. Dadurch ist es möglich, dass eine Klemmkraft radial auf ein Element, das sich in der Aussparung 13 befindet, wie z. B. ein Rohr, ausgeübt wird. Hierdurch kann ein Klemmen mit einem Form- und/oder Kraftschluss erzeugt werden.

Entsprechend Ausführungsbeispielen kann die Verformung auch dazu dienen, dass ein Rohr durch die Öffnung 13o zwischen den zwei Gehäusehälften 12a und 12b eingeführt wird und in dem Hinterschneidungsbereich gehalten wird.

Ausgehend von der Vogelperspektive aus Fig. 1b erstreckt sich also dann ein Rohr (nicht dargestellt) in bzw. aus der Darstellungsebene heraus. Das heißt also, dass das Gehäuse 12 ausgebildet ist, an einem länglichen Gegenstand, der sich entlang der Längsachse L erstreckt, geklemmt zu werden. Bevorzugterweise weist der längliche Gegenstand eine an die Aussparung 13 angepasste Form, z. B. eine runde Form, auf. Das heißt also, dass der längliche Gegenstand auch eine andere Form, wie z. B. eine eckige Form, aufweisen kann, wobei dann bevorzugterweise die Aussparung 13 ebenfalls eine entsprechend eckige Form aufweist. Dadurch ist es möglich, dass allein aus Grund der Formgebung die Signallampe 10 an ein Rohr, z. B. ein vertikales Rohr einer Baumaschine, Arbeits- oder Landmaschine oder eines Fahrzeugs, angeklemmt wird. Das Gehäuse 12 sowie der durchsichtige Bereich 12d und auch die Leuchtelemente 14 erstrecken sich dann um das Rohr in der Aussparung 13 herum. An dieser Stelle sei angemerkt, dass die runde Form der Aussparung 13 auch im aufgebogenen Zustand (vgl. elastischer Verformungsbereich V) haben kann, während in einem nicht verformten Zustand die Aussparung 13 beispielsweise eine ovale Form aufweisen kann.

Ausgehend hiervon erstrecken sich die Leuchtelemente 14, wie z. B. RBG-LEDs oder RGBW-LEDs, kreisförmig um das Klemmobjekt herum. Das hat vorteilhafterweise den Effekt, dass so in einem großen Abstrahlungsbereich, hier über 180° oder sogar über 270° ein Erkennen des Beleuchtungssignals möglich ist. Zur Ansteuerung der LEDs kann die Einheit 10 eine Steuerung (nicht dargestellt) aufweisen; diese dient z.B. zum Empfangen von Datenbus-Signalen, zum Dekodieren der Datenbus-Signale und zur entsprechenden (individuellen) Ansteuerung im Sinne von Umwandlung der Nachrichten in Farbsignale, Textsignale oder Grafiksignale. Die Steuerung kann entsprechend Ausführungsbeispielen zwischen Tag- und Nacht-Modus differenzieren. Abhängig hiervon wäre es denkbar, dass die Helligkeit (allgemein Darstellung) geregelt wird, um Lesbarkeit unter allen Lichtbedingungen zu optimieren.

In diesem Zusammenhang kann entsprechend weiteren Ausführungsbeispielen die Signallampe 10 einen Helligkeitssensor (in den Figuren nicht dargestellt) aufweisen. Hierdurch kann die Helligkeit der Leuchtelemente 14, beispielsweise durch die oben beschriebene Steuerung, automatisch an die Umgebungshelligkeit angepasst und die Ablesbarkeit der Leuchtelemente 14 verbessert werden. Auch kann der Stromverbrauch der Signallampe 10 durch die Anpassung der Helligkeit der Leuchtelemente 14 an die Umgebungslichtverhältnisse optimiert werden. Des Weiteren kann die Signallampe 10 einen Temperatursensor (in den Figuren nicht dargestellt) aufweisen, wodurch ebenfalls die Helligkeit der Leuchtelemente 14 automatisch angepasst werden kann.

Bei dem Ausführungsbeispiel aus Fig. 1a und 1b wurde davon ausgegangen, dass sowohl an dem unteren als auch an dem oberen Ende des Zylinders die durchsichtigen Bereiche 12d vorgesehen sind, so dass zwei Beleuchtungsarrays mit den Beleuchtungselementen 14 vorgesehen sind. Hierdurch ist es möglich, sowohl unten als auch oben das entsprechende Farbsignal auszugeben oder auch oben und unten unterschiedliche Signale auszugeben. Beispielsweise können oben nur Alarmsignale (Warnhinweise) mit rot signalisiert werden und unten nur Bereitschaftssignale (Statusanzeigen) mit grün. Eine Variation der Farben und auch der Signalzustände ist selbstverständlich auch möglich. Alternativ ist es auch denkbar, dass statt einfarbigen LEDs auch mehrfarbige LEDs (RGB- oder RGBW-LEDs, z.B. 100 RGB- oder RGBW-LEDs) verwendet werden, so dass über ein und dasselbe Array oben oder unten mehrere Signalzustände signalisierbar sind. LEDs haben allgemeinen den Vorteil energiesparend zu sein.

Alternativ oder additiv kann auch der Mantel-Flächenbereich 12m (s. Fig. 1c) ein oder mehrere Beleuchtungselemente oder flächige Beleuchtungselemente 14 aufweisen, beispielsweise ein oder mehrere einfarbige oder mehrfarbige LEDs (RGB- oder RGBW-LEDs oder LED-Arrays). Dazu ist der Mantel-Flächenbereich 12m entweder komplett oder zumindest bereichsweise durchsichtig ausgeführt.

Die unterschiedlichen Signalzustände sind auch über unterschiedliche Blinkfrequenzen möglich. Darüber hinaus wäre es auch denkbar, dass Lauflichter durch individuelle Ansteuerung der mehreren Beleuchtungselemente 14 seriell in Reihe denkbar wären, um beispielsweise einen Wartezustand zu symbolisieren. Ferner können Beleuchtungselemente 14 flexibel für z.B. Füllstände genutzt werden (individuell Ansteuerung). Gemäß weiteren Ausführungsbeispielen liefert neben bloßen Farbsignalen die Einheit 10 konkrete Meldungen, die auf den Anwendungskontext zugeschnitten sind. Kunden können Logos, Bilder und Texte nutzen und so die Signallampe an ihre Bedürfnisse anpassen. Die Beleuchtungselemente 14 können also als Art Matrix zur Darstellung von Text oder ähnlichem, vorzugsweise im mittleren Bereich der Signalvorrichtung 10 angeordnet sein. Hierfür ist dieser mittlere Bereich des Zylinders, d. h. der Bereich zwischen den unteren und oberen Bereichen 12d, ebenfalls durchsichtig ausgeführt.

Entsprechend weiteren Ausführungsbeispielen wäre es auch denkbar, dass mehrere, das heißt mehr als die zwei Arrays, als Beleuchtungselemente vorgesehen sind.

Wie bereits oben erläutert erfolgt die Abstrahlung bevorzugterweise in einem großen Abstrahlbereich (> 120°, > 150°, >180° oder sogar > 270°). Durch diesen Abstrahlbereich wird ein ringförmiges Beleuchtungsarray oder auch C-förmiges oder U-förmiges Beleuchtungsarray ausgebildet.

An dieser Stelle sei angemerkt, dass die Signallampe 10 auch Kommunikationsmittel, z. B. Funkkommunikationsmittel wie beispielsweise Bluetooth, WLAN oder dergleichen, aufweisen kann, um von extern, z. B. von einer Baumaschine/Arbeitsmaschine/Landmaschine oder von einem Fahrzeug, die entsprechenden Informationen, die per Farbcodierung angezeigt werden sollen bzw. allgemein mit der Statusanzeige angezeigt werden sollen, zu empfangen. Natürlich ist entsprechend Ausführungsbeispielen auch denkbar, dass eine Kabelverbindung zu der Baumaschine/Arbeitsmaschine/Landmaschine oder dem Fahrzeug hergestellt wird. Insofern kann die Statusanzeige 10 eine Schnittstelle, insbesondere eine Kabelschnittstelle zum Empfangen von Daten, aufweisen. Entsprechend weiteren Ausführungsbeispielen kann über eine derartige Schnittstelle oder diese Schnittstelle auch elektrische Energie zum Betreiben der Signalleuchte und/oder zum Aufladen eines Akkus der Signalleuchte auf. Entsprechend Ausführungsbeispielen kann die Signalleuchte natürlich auch batteriebetrieben sein oder andere Energieversorgungsmittel aufweisen.

Entsprechend weiteren Ausführungsbeispielen kann in oder an der Signallampe 10 ein Neigungs- oder Lagesensor (in den Figuren nicht dargestellt) angeordnet sein, um die Anordnung der Signalleuchte an der Baumaschine/Arbeitsmaschine/Landmaschine oder des Fahrzeugs in waagerechter oder senkrechter Position zu ermitteln. Auch kann mit dem Neigungs- oder Lagesensor eine Lage- oder Positionsänderung der Signallampe 10 erkannt werden. Weist die Signallampe 10 eine wie oben beschriebene Matrix zur Darstellung von Logos, Bildern oder Texten auf, so ist es beispielsweise bei einer Drehung der Signallampe 10 um 90° möglich, den angezeigten Inhalt (bspw. ein Bild oder einen Text) automatisch an die neue Lage/Position anzupassen.

Alternativ oder zusätzlich zur oben beschriebenen Klemmung des Gehäuses 12 durch Form- und/oder Kraftschluss ist eine Befestigung der Signallampe 10 an einer Baumaschine/Arbeitsmaschine/Landmaschine oder an einem Fahrzeug mittels Schraubverbindung möglich. Dazu weist das Gehäuse 12 beispielsweise im Bereich der Aussparung 13 oder der Öffnung 13o entsprechende Mittel zur Befestigung der Signallampe 10 auf. Die Mittel zur Befestigung können beispielsweise Gewindebohrungen, Gewindehülsen, Gewindeeinsätze, Gewindebolzen oder ähnliches sein. Weitere Befestigungsmöglichkeiten, alternativ oder zusätzlich zur bereits beschriebenen Klemmung des Gehäuses 12, wie beispielsweise über mechanische Halterungen oder Bügel sind denkbar und möglich. In diesem Zusammenhang ist auch eine Befestigung der Signallampe 10 an der Baumaschine/Arbeitsmaschine/Landmaschine oder an dem Fahrzeug über eine entsprechende mechanische Halterung denkbar, mittels welcher die Signallampe 10 einfach und ohne weiteres Werkzeug an der Maschine/an dem Fahrzeug befestigt werden kann.

## Patentansprüche

1. Signalleuchte (10), insbesondere eine Signalleuchte (10) für eine Baumaschine, Arbeitsmaschine, Landmaschine oder ein Fahrzeug mit folgenden Merkmalen:
einem Gehäuse (12);
mindestens einem in das Gehäuse (12) integrierten Leuchtelement (14), das ausgebildet ist, einen Zustand zu visualisieren;
wobei das Gehäuse (12) eine C- oder U-Form aufweist und bereichsweise flexibel ist.

2. Signalleuchte (10) gemäß Anspruch 1, wobei das Gehäuse (12) ausgebildet ist, aufgrund der bereichsweise flexiblen Eigenschaft bezüglich eines Öffnungsquerschnitts (13), der durch Enden der C- oder U-Form definiert ist, elastisch verformt zu werden.

3. Signalleuchte (10) gemäß einem der vorherigen Ansprüche, wobei durch die C- oder U-Form ein halbrunder Öffnungsquerschnitt oder ein definierter Öffnungsquerschnitt (13) ausgebildet wird.

4. Signalleuchte (10) gemäß Anspruch 3, wobei der halbrunde Öffnungsquerschnitt (13) oder der definierte Öffnungsquerschnitt ausgebildet ist, ein Klemmen gegenüber einem Gegenstück zu bewirken und/oder einen Reibschluss oder Kraft-schluss mit dem Gegenstück auszubilden.

5. Signalleuchte (10) gemäß einem der Ansprüche 3 oder 4, wobei der halbrunde Öffnungsquerschnitt (13) oder der definierte Öffnungsquerschnitt (13) flexibel verformbar ist.

6. Signalleuchte (10) gemäß einem der vorherigen Ansprüche, wobei das Gehäuse (12) mit der C- oder U-Form in der ersten und zweiten Dimension eine längliche Form in der dritten Dimension aufweist und/oder wobei das Gehäuse (12) mit der C- oder U-Form in dreidimensionaler Betrachtungsweise eine Zylinderform aufweist.

7. Signalleuchte (10) gemäß einem der vorherigen Ansprüche, wobei das zumindest eine integrierte Leuchtelement (14) ausgebildet ist, um mit verschiedenen Farben und/oder verschiedenen Darstellungsfrequenzen verschiedene Zustände zu visualisieren; und/oder
wobei das mindestens eine Leuchtelement (14) einen Abstrahlwinkel größer 120°, größer 150°, größer 180° oder größer 210° aufweist.

8. Signalleuchte (10) gemäß einem der vorherigen Ansprüche, wobei die Signalleuchte (10) eine Datenbus- und/oder Datenfunkschnittstelle aufweist, über welche diese mit einer Steuerung oder einer Baumaschine, Arbeitsmaschine, Landmaschine oder Fahrzeug und/oder einer Komponente der Maschine/des Fahrzeugs koppelbar ist.

9. Signalleuchte (10) gemäß einem der vorherigen Ansprüche, wobei die Signalleuchte (10) eine elektrische Energieversorgung, insbesondere eine in der Signalleuchte (10) integrierte oder daran angeordnete Batterie oder eine wiederaufladbare Batterie aufweist.

10. Signalleuchte (10) gemäß einem der vorherigen Ansprüche, wobei das mindestens eine integrierte Leuchtelement (14) als Lauflicht oder als Matrix zur Darstellung von Texten oder Bildern oder ähnlichem ausgebildet ist.

11. Signalleuchte (10) gemäß einem der vorherigen Ansprüche, wobei in oder an der Signalleuchte (10) ein Helligkeitssensor und/oder ein Temperatursensor angeordnet ist.

12. Signalleuchte (10) gemäß einem der vorherigen Ansprüche, wobei in oder an der Signalleuchte (10) ein Neigungs- oder Lagesensor angeordnet ist.

13. Signalleuchte (10) gemäß einem der vorherigen Ansprüche, wobei die Signalleuchte (10) einen integrierten Summer oder Buzzer aufweist.

14. Baumaschine, Arbeitsmaschine, Landmaschine oder Fahrzeug mit einer Signalleuchte (10) gemäß einem der vorherigen Ansprüche.

15. Baumaschine, Arbeitsmaschine, Landmaschine oder Fahrzeug gemäß Anspruch 14, wobei die Baumaschine, Arbeitsmaschine, Landmaschine oder das Fahrzeug ein Rohr oder einen Rahmen oder einen Halter aufweist, der in seinem Querschnitt im Wesentlichen dem Öffnungsquerschnitt (13) entspricht.

16. Baumaschine, Arbeitsmaschine, Landmaschine oder Fahrzeug gemäß Anspruch 14 oder 15, wobei die Signalleuchte (10) ausgebildet ist, einen oder mehrere Zustände der Baumaschine, Arbeitsmaschine, Landmaschine oder des Fahrzeugs oder einer Komponente der Baumaschine, Arbeitsmaschine, Landmaschine oder des Fahrzeugs anzuzeigen.

17. Baumaschine, Arbeitsmaschine, Landmaschine oder Fahrzeug gemäß einem der Ansprüche 14 bis 16, wobei die Baumaschine, Arbeitsmaschine, Landmaschine oder das Fahrzeug oder die Komponente der Baumaschine, Arbeitsmaschine, Landmaschine oder des Fahrzeugs oder die Steuerung der Baumaschine, Arbeitsmaschine, Landmaschine oder des Fahrzeugs informatorisch mit der Signalleuchte (10) gekoppelt ist.

18. System umfassend eine Signalleuchte (10) gemäß einem der Ansprüche 1 bis 13 sowie ein Rohr oder Rahmen oder Halter mit einem definierten Querschnitt.
